# EUROPEAN PATENT APPLICATION

(11) **EP 4 814 437 A1**
(43) Date of publication of application: **30.09.2026**
(21) Application number: 25166687.1
(22) Date of filing: 27.03.2025
(51) Int. Cl.: G01B 11/24

(54) **METHOD OF QUALITY INSPECTION OF A POWER CABLE**

(71) Applicant: NKT HV Cables AB, 371 60 Lyckeby (SE)
(72) Inventor: RIAZ, Fahim, Karlskrona (SE); SANTOSH, Adeep, Karlskrona (SE)
(74) Representative: Kransell & Wennborg KB

(57) **Abstract**

A method of 3D-scanning a surface region of interest (10) of a layer of a power cable, comprising: a) arranging a plurality of first reflective markers (12) on a first surface region (13) of the power cable along the circumference of the power cable, b) arranging a plurality of second reflective markers (16) on a second surface region (15) of the power cable (1) along the circumference of the power cable, such that the surface region of interest (10) is located axially between the first reflective markers (12) and the second reflective markers (16), c) scanning the surface region of interest (10) with a 3D scanner (19), the first reflective markers (12) and the second reflective markers (16) defining reference points for the 3D scanner (19) when scanning the surface region of interest (10), and d) removing the first reflective markers (12) and the second reflective markers (16) from the power cable after the scanning of the surface region of interest (10) in step c) has been completed.

## Description

### TECHNICAL FIELD

The present disclosure generally relates to quality inspection of power cables.

### BACKGROUND

High voltage (HV) power cables generally include, from inside to outside: a conductor, an insulation system, and an outer sheath. In particular, the insulation system comprises an inner semiconducting layer, an insulating layer arranged around the inner semiconducting layer, and an outer semiconducting layer arranged around the insulating layer.

It is required to mechanically process an HV power cable when for example making a joint. The processing includes peeling off the outer semiconducting layer and may include subsequent grinding of the insulating layer, depending on the voltage rating of the cable.

It is important that the processed layers have an even surface structure. A conventional method of inspecting the processing result is a manual inspection of the processed layers relying on tactile feedback, by sliding a finger over the processed area. The quality of a manual inspection depends on the experience of the inspecting person.

Other conventional methods include measurement with a slide gauge or with a diameter tape. In general, conventional methods of inspecting the insulation of an HV cable after processing have limitations as to their reliability and replicability.

Laser scanning methods have recently been used for quality control of power cables. EP 3 901 571 A1, for example, discloses a system and a method for determining the quality of a surface of a high voltage cable end using a 3D laser scanner.

### SUMMARY

In known laser scanning methods of power cables, a tunnel-like frame is placed around the cable prior to scanning by passing it over the power cable end section. The frame is formed by a mesh structure with nodes provided with reflective points which facilitates in position and distance determination for the generation of a 3D model of the power cable based on the scanning with the laser scanner.

There is a potential risk of damaging the power cable when arranging the frame around the power cable and when removing the frame from the power cable. Moreover, it may be challenging to install the frame over a power cable end section in a cramped space when preparing a joint or termination in the field.

An object of the present disclosure is to provide a method which solves or at least mitigates the problems of the prior art.

There is hence provided a method of 3D-scanning a surface region of interest of a layer of a power cable, comprising: a) arranging a plurality of first reflective markers on a first surface region of the power cable along the circumference of the power cable, b) arranging a plurality of second reflective markers on a second surface region of the power cable along the circumference of the power cable, such that the surface region of interest is located axially between the first reflective markers and the second reflective markers, c) scanning the surface region of interest with a 3D scanner, the first reflective markers and the second reflective markers defining reference points for the 3D scanner when scanning the surface region of interest, and d) removing the first reflective markers and the second reflective markers from the power cable after the scanning of the surface region of interest in step c) has been completed.

Because the reflective markers are arranged directly on the power cable, instead of being provided on a frame that is passed over the power cable, the risk of damaging the power cable is reduced. Moreover, since the reflective markers are placed directly on the first/second surface region, the reflective markers are closer to the power cable, with no mesh structure partly covering the power cable in regions where the 3D scanner is to be used. Furthermore, since the reflective markers are placed directly on the first/second surface region, they can be placed on the power cable in confined spaces where it would not be possible to utilise an external frame. The installation of the reflective markers is also simpler than the installation of a frame around the power cable.

According to one embodiment each first reflective marker has a first base contacting the first surface region and comprising a material compatible with a material of the first surface region.

Compatible in this context means that there is no undesired chemical reaction taking place between the material of the first base and the material of the first surface region. In particular, first base is of a material that does not have any detrimental effect on the electrical properties of the material of the first surface region.

Each first reflective marker may be light in colour in relation to a colour directly outside of the first reflective marker. The first reflective markers may for example be provided on a dark background forming part of the first base.

According to one embodiment the first base is common to all the first reflective markers.

The surface region of interest, the first surface region, and the second surface region may form part of an end section of the power cable.

The 3D-scanning of a surface region of interest of a layer of a power cable may form part of a cable accessory installation process.

The cable accessory installation process may be a cable jointing process or a cable termination installation process.

According to one embodiment the first base is a first tape.

The first tape may be one available during e.g., a cable accessory installation process. This further simplifies steps a) and b).

According to one embodiment the first tape is a polymeric tape.

The first tape may for example comprise the same polymer material as the base polymer of the insulation system of the power cable. Alternatively, the first tape may comprise a different polymer material than the base polymer of the insulation system.

According to one example, the first tape is a polypropene tape.

According to one embodiment each second reflective marker has a second base contacting the second surface region and comprising a material compatible with a material of the second surface region.

Compatible in this context means that there is no undesired chemical reaction between the material of the base and the material of the second surface region.

Each second reflective marker may be light in colour in relation to a colour directly outside of the second reflective marker. The second reflective markers may for example be provided on a dark background forming part of the second base.

According to one embodiment the second base is common to all the second reflective markers.

According to one embodiment the second base is a second tape.

The second tape may be one available during e.g., a cable accessory installation process.

According to one embodiment the second tape is a polymeric tape.

The second tape may for example comprise the same polymer material as the base polymer of the insulation system of the power cable. Alternatively, the second tape may comprise a different polymer material than the base polymer of the insulation system.

According to one example, the second tape is a polypropene tape.

One embodiment comprises, based on the scanning in step c), generating a first 3D model of the surface region of interest.

One embodiment comprises, after step d): e) arranging a plurality of third reflective markers on a third surface region of the power cable along the circumference of the power cable, f) arranging a plurality of fourth reflective markers on a fourth surface region of the power cable along the circumference of the power cable, such that the second surface region is a second surface region of interest located axially between the third reflective markers and the fourth reflective markers, g) scanning the second surface region of interest with the 3D scanner, the third reflective markers and the fourth reflective markers defining reference points for the 3D scanner when scanning the second surface region of interest, and h) removing the third reflective markers and the fourth reflective markers from the power cable after the scanning of the second surface region of interest in step g) has been completed.

One embodiment comprises, based on the scanning in step g), generating a second 3D model of the second surface region of interest.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 is cross-section of an example of a power cable;
Fig. 2 schematically shows a side view of a power cable after preparation of cable layers;
Fig. 3 schematically shows a side view of the power cable after arranging reflective markers on some cable layers;
Fig. 4 schematically shows a side view of the power cable after arranging reflective markers on some cable layers; and
Fig. 5 is a flowchart of a method of 3D-scanning a surface region of interest of a layer of a power cable.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

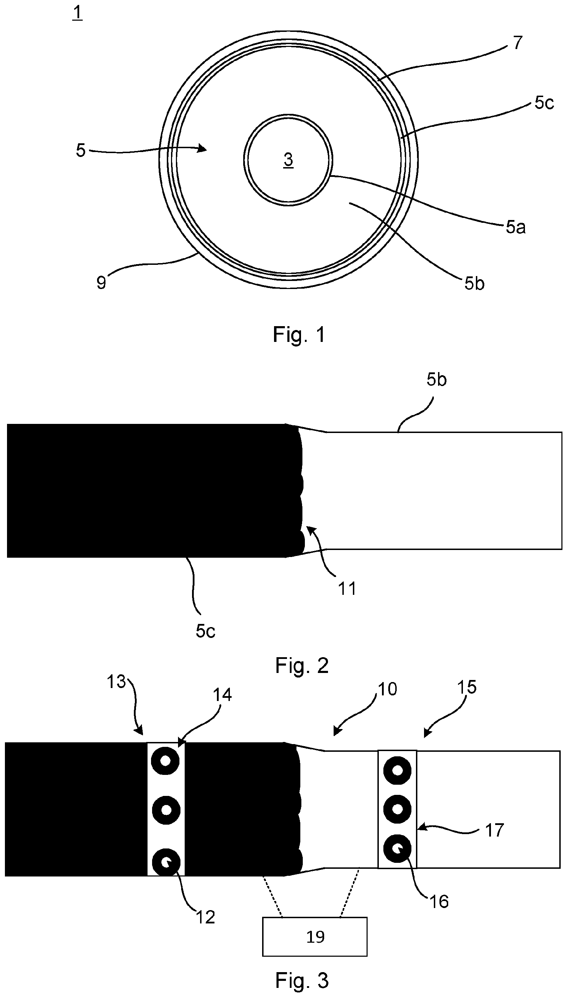

Fig. 1 is a cross-section of an example of a power cable 1. The exemplified power cable 1 may be the subject of a method of 3D-scanning a surface region of interest of a layer of the power cable. It is to be noted that other power cables, for example, without a radial water barrier, may also be the subject of the method.

The exemplified power cable 1 comprises a conductor 3. The conductor 3 may for example be formed of multiple strands and/or segments, or it may be solid. The conductor 3 may for example comprise copper or aluminium.

The power cable 1 comprises an insulation system 5. The insulation system 5 is arranged around the conductor 3. The insulation system 5 comprises an inner semiconducting layer 5a, an insulation layer 5b arranged around the inner semiconducting layer 5b, and an outer semiconducting layer 5c arranged around the insulation layer 5b.

The insulation system 5 may be an extruded insulation system.

The insulation system 5 may comprise a polymeric material, in particular a thermosetting or a thermoplastic polymer. For example, each of the inner semiconducting layer 5a, the insulation layer 5b, and the outer semiconducting layer 5c may comprise a base polymer that is thermosetting or thermoplastic. Base polymer examples include polyethylene-based, polypropylene-based, ethylene propylene diene monomer rubber-based, and ethylene propylene rubber-based polymers.

The power cable 1 may further optionally comprise a metallic radial water barrier 7. The metallic radial water barrier 7 may be longitudinally bonded by an adhesive, solder, or by welding, or it may be a helically wound metallic tape. The metallic radial water barrier 7 may for example comprise copper, aluminium, stainless steel, lead, or have a laminated structure of metal and a polymeric material.

The power cable 1 may comprise a polymeric sheath 9 arranged around the insulation system 5. In case the power cable 1 comprises the metallic radial water barrier 7, the polymeric sheath 9 is arranged around the metallic radial water barrier 7.

The power cable 1 may be an AC power cable or a DC power cable. The power cable 1 may be a single core power cable or a multi-core power cable.

The power cable 1 may be an underground power cable or a submarine power cable. If the power cable 1 is a submarine power cable, it may be a static or dynamic submarine power cable.

The power cable 1 may be assembled with a cable accessory such as a cable joint or a cable termination. An end section of the power cable 1 is prepared for the cable accessory installation process. The preparation includes removal of sections of each layer of the insulation system 5, typically using a peeling tool. An axial section of each of the inner semiconducting layer 5a, the insulation layer 5b, and the outer semiconducting layer 5c is removed by means of the peeling tool. The peeling is followed by mechanical processing such as grinding of each of the inner semiconducting layer 5a, the insulation layer 5b, and the outer semiconducting layer 5c. Typically, a longer axial portion of the outer semiconducting layer 5c is removed as compared to the insulation layer 5b. Moreover, typically a longer axial portion of the insulation layer 5b is removed as compared to the inner semiconducting layer 5a.

According to the present disclosure, a 3D scanner is used for the purpose of determining a surface quality of one or more layers of the end section of the power cable 1. In a typical scenario, this would be after the peeling and mechanical processing of the end section of the power cable 1, prior to the accessory installation. The one or more layers may typically be one or more layers of the insulation system 5, i.e., one or more of the inner semiconducting layer 5a, the insulation layer 5b, and/or the outer semiconducting layer 5c.

Fig. 2 is a schematic side view of a portion of an end section of the power cable 1, with an axial section of the outer semiconducting layer 5c peeled off to expose the underlying insulation layer 5b. Layer(s) outside the insulation system 5, such as the metallic radial water barrier 7 and the polymeric layer 9, have also been removed along the depicted section. A transition section 11, between the outer semiconducting layer 5c and the insulation layer 5b, shaped during peeling and the following mechanical processing is also depicted.

A method of 3D-scanning a surface region of interest of a layer 10 of a power cable such as the power cable 1 will now be described with reference to Figs 2-5. The surface region of interest is in the example located at an end section of the power cable 1.

In a step a) a plurality of first reflective markers 12 are arranged on a first surface region 13 of the power cable 1 along the circumference of the power cable 1, as shown in Fig. 3. The first reflective markers 12 may be distributed along the entire circumference of the power cable 1 in the first surface region 13. Step a) may be carried out by accessory installation personnel.

The first surface region 13 may for example be a region or section of an outer surface of the outer semiconducting layer 5c as in the example in Fig. 3, or an outer surface of the insulation layer 5b.

Each first reflective marker 12 may according to one example have a first base 14. The first base 14 may directly contact the first surface region 13. The first base 14 comprises a material compatible with a material of the first surface region 13. For example, if the first surface region 13 is a region or section of the outer semiconducting layer 5c, the first base 14 is composed of a material compatible with the material of the outer semiconducting layer 5c. For example, the first base 14 may comprise a base polymer of the same material as the base polymer in the outer semiconducting layer 5c. As an example, the base polymer may be polyethylene or a polypropylene-based polymer.

In one example, the first base 14 is common to all the first reflective markers 12. The first base 14 may for example be a first tape, such as a polymeric tape. The first reflective markers 12 may be bonded to the first tape for example by means of adhesive. Because the first tape acts as a buffer between the first reflective markers 12 and the first surface region 13, is not necessary that the first reflective markers 12 are made of a material compatible with the material of the first surface region 13.

In a step b) a plurality of second reflective markers 16 are arranged on a second surface region 15 of the power cable 1 along the circumference of the power cable 1. The second reflective markers 16 may be distributed along the entire circumference of the power cable 1 in the second surface region 15.

The surface region of interest 10 is located axially between the first reflective markers 12 and the second reflective markers 16. With "axially" is meant longitudinally axially of the power cable 1.

The second surface region 15 may for example be a region or section of another layer of the insulation system 5, for example an outer surface of the insulation layer 5b as in the example shown in Fig. 3. The first surface region 13 and the second surface region 15 could however according to some examples be different surface regions of the same layer, e.g., the outer semiconducting layer 5c, the insulation layer 5b, or the inner semiconducting layer 5a.

Each second reflective marker 16 may according to one example have a second base 17. The second base 17 may directly contact the second surface region 15. The second base 17 comprises a material compatible with a material of the second surface region 15. For example, if the second surface region 15 is a region or section of the insulation layer 5b, the second base 16 is composed of a material compatible with the material of the insulation layer 5b. For example, the second base 16 may comprise a base polymer of the same material as the base polymer in the insulation layer 5b. As an example, the base polymer may be polyethylene or a polypropylene-based polymer.

In one example, the second base 17 is common to all the second reflective markers 16. The second base 17 may for example be a second tape, such as a polymeric tape. The second reflective markers 16 may be bonded to the second tape for example by means of adhesive. Because the second tape acts as a buffer between the second reflective markers 16 and the second surface region 15, is not necessary that the second reflective markers 16 are made of a material compatible with the material of the second surface region 15.

In a step c) the surface region of interest is scanned with a 3D scanner 19.

The 3D scanner 19 may for example be a laser scanner. The 3D scanner 19 may be a handheld 3D scanner, such as a handheld laser scanner. Accessory installation personnel may operate the 3D scanner in step c).

The first reflective markers 12 and the second reflective markers 16 define reference points for the 3D scanner 19 when scanning the surface region of interest 10. This facilitates in creating a 3D model of the region of interest 10 based on the data collected by the 3D scanner 19 when scanning the surface region of interest 10.

Thus, based on the scanning in step c), a first 3D model of the surface region of interest is generated. The first 3D model may be generated on a computing device locally or in the cloud, for example.

In a step d) the first reflective markers 12 and the second reflective markers 16 are removed from the power cable 1 after the scanning of the surface region of interest 10 in step c) has been completed. For example, the first base 14 and the second base 17 in the form of a first and a second tape may be removed from the power cable 1.

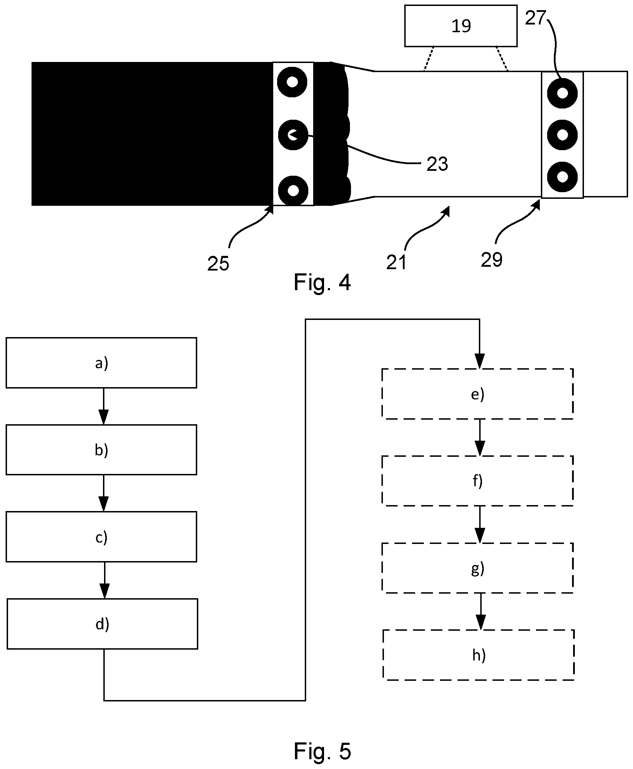

As shown in Fig. 4 the method may further comprise scanning a second surface region of interest 21 with the 3D scanner 19 after step d). This may be the case if the first or second surface region 13, 15 initially covered by the first or second reflective markers 12, 16 is to be scanned as the second region of interest 21 by the 3D scanner. In this case, in a step e) a plurality of third reflective markers 23 are arranged on a third surface region 25 of the power cable 1 along the circumference of the power cable 1.

In a step f) a plurality of fourth reflective markers 27 are arranged on a fourth surface region 29 of the power cable 1 along the circumference of the power cable 1. The fourth reflective markers 27 are arranged such that the second surface region 15 becomes the second surface region of interest 21 located axially between the third reflective markers 23 and the fourth reflective markers 27.

In a step g) the second surface region of interest 21 is scanned with the 3D scanner 19. The third reflective markers 23 and the fourth reflective markers 27 define reference points for the 3D scanner 19 when scanning the second surface region of interest 21.

In a step h) the third reflective markers 23 and the fourth reflective markers 27 are removed from the power cable 1 after the scanning of the second surface region of interest 21 in step g) has been completed.

The first and second reflective markers 12, 16 may be reused in steps e) and f), especially if they are also compatible with the new regions where they are to be attached. The third reflective markers 23 and the fourth reflective markers 27 may thus in some examples be the first reflective markers 12 and the second reflective markers 16, respectively.

Based on the scanning in step g), a second 3D model of the second surface region of interest 21 may be generated.

The first 3D model and the second 3D model may be used to evaluate the quality of the peeling and/or the mechanical processing prior to commencement with installation of the accessory. In case it is determined that the quality does not meet quality requirements, further mechanical processing may be carried out, followed by performing the herein described method to ensure that the required quality of the mechanical processing has been reached.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Method of 3D-scanning a surface region of interest (10) of a layer of a power cable (1), comprising:
a) arranging a plurality of first reflective markers (12) on a first surface region (13) of the power cable (1) along the circumference of the power cable (1),
b) arranging a plurality of second reflective markers (16) on a second surface region (15) of the power cable (1) along the circumference of the power cable (1), such that the surface region of interest (10) is located axially between the first reflective markers (12) and the second reflective markers (16),
c) scanning the surface region of interest (10) with a 3D scanner (19), the first reflective markers (12) and the second reflective markers (16) defining reference points for the 3D scanner (19) when scanning the surface region of interest (10), and
d) removing the first reflective markers (12) and the second reflective markers (16) from the power cable (1) after the scanning of the surface region of interest (10) in step c) has been completed.

2. Method as claimed in claim 1, wherein each first reflective marker (12) has a first base (14) contacting the first surface region (13) and comprising a material compatible with a material of the first surface region (13).

3. Method as claimed in claim 2, wherein the first base (14) is common to all the first reflective markers (12).

4. Method as claimed in claim 2 or 3, wherein the first base (14) is a first tape.

5. Method as claimed in claim 4, wherein the first tape is a polymeric tape.

6. Method as claimed in any of the preceding claims, wherein each second reflective marker (16) has a second base (17) contacting the second surface region (15) and comprising a material compatible with a material of the second surface region (15).

7. Method as claimed in claim 6, wherein the second base (17) is common to all the second reflective markers (16).

8. Method as claimed in claim 6 or 7, wherein the second base (17) is a second tape.

9. Method as claimed in claim 8, wherein the second tape is a polymeric tape.

10. Method as claimed in any of the preceding claims, comprising, based on the scanning in step c), generating a first 3D model of the surface region of interest.

11. Method as claimed in any of the preceding claims, comprising, after step d):
e) arranging a plurality of third reflective markers (23) on a third surface region (25) of the power cable (1) along the circumference of the power cable (1),
f) arranging a plurality of fourth reflective markers (27) on a fourth surface region (29) of the power cable (1) along the circumference of the power cable (1), such that the second surface region (17) is a second surface region of interest (21) located axially between the third reflective markers (23) and the fourth reflective markers (27),
g) scanning the second surface region of interest (21) with the 3D scanner (19), the third reflective markers (23) and the fourth reflective markers (27) defining reference points for the 3D scanner (19) when scanning the second surface region of interest (21), and
h) removing the third reflective markers (23) and the fourth reflective markers (27) from the power cable (1) after the scanning of the second surface region of interest (21) in step g) has been completed.

12. Method as claimed in claim 11, comprising, based on the scanning in step g), generating a second 3D model of the second surface region of interest (21).
